# EUROPEAN PATENT APPLICATION

(11) **EP 1 450 372 A1**
(43) Date of publication of application: **25.08.2004**
(21) Application number: 04250927.3
(22) Date of filing: 20.02.2004
(51) Int. Cl.: G11B 27/32

(54) **Information processing apparatus, its method, its program, recording medium storing the program, and player**

(30) Priority: 24.02.2003 JP 2003046306
(71) Applicant: Pioneer Corporation, Tokyo 153-8654 (JP)
(72) Inventor: Okamoto, Morihiro c/o Pioneer Corporation, Kawagoe-shi Saitama 350-8555 (JP)
(74) Representative: Haley, Stephen

(57) **Abstract**

A computing unit (130) controls a servo controller (114) to move an optical pickup (111) to the innermost circumference of a mounted recording disk and acquires a recording information from a lead-in area of a first session by a recording-information acquiring unit (132). When the computing unit (130) determines that the recording disk (1) is a multi-session type according to the recording information, the computing unit (130) acquires a recording information of a second session and compares the recording information by an information determining unit (133). As a result of the comparison, if the recording information is determined as abnormal on account of copy protection, the computing unit (130) does not store the recording information of the second session, but acquires a program information based on the recording information of the first session and reproduces the program information.

## Description

The present invention relates to an information processing apparatus for acquiring information from a recording medium of, for example, multi-session type, its method, its program, a recording medium storing the program and a player.

Conventionally, a configuration of the prior art 1 (Japanese Patent Laid-open publication No. Hei 10-233080, the right column on page 2 to the right column on page 4) is known as an example of a method for acquiring information from a recording medium of so-called multi-session type including a plurality of recording areas.

The prior art 1 processes information of the recording medium of multi-session type, which may be a recording medium such as a CD (Compact Disk) or a DVD (Digital Versatile Disc), having a plurality of sets each composed of: a session as an area storing various information such as music data and photo data; a lead-in area storing TOC (Table Of Contents) information; and a lead-out area. The prior art 1 reads the TOC information from the recording medium and determines the kind of the recording medium as a CD-DA (Compact Disk-Digital Audio) or a CD-ROM (Compact Disk-Read Only Memory). The prior art 1 further determines the type of the recording medium as single-session type with only one session or multi-session type with a plurality of sessions.

When the recording medium is determined as the multi-session type, the prior art 1 acquires the characteristics of information stored in the session, i.e. a selection information is either music data or photo data. Based on the acquired selection information, the prior art 1 runs a certain reproducing program for processing the information so that the information can be output, and the information is processed.

The prior art 1, however, cannot acquire corresponding information even when searching information in the session based on the TOC information, upon the reproduction of the recording medium including an abnormal data in the TOC information of the lead-in area for the purpose of copy protection, therefore, reproduction failure may occur as an example of problem.

An object of the present invention is to provide an information processing apparatus, its method, its program, a recording medium storing the program and a player for preventing failure in information processing even when a recording medium is multi-session type with an abnormal recording information associated with record of information.

An information processing apparatus according to a first aspect of the present invention includes: an information acquiring unit that acquires an information from a recording medium including plural sets of an information area storing the information and a recording information area corresponding to the information area, the recording information area storing a recording information associated with the information; a recording-information acquiring unit that acquires the recording information from the recording medium; an information determining unit that determines whether the recording information of the respective recording information areas acquired by the recording-information acquiring unit is abnormal or not; and an information selecting unit that operates, when the information determining unit determines that the recording information is abnormal, the information acquiring unit to acquire the information of the information area corresponding to the recording information area storing at least one of the recording information out of the recording information acquired before acquiring the recording information that is determined as abnormal.

An information processing apparatus according to a second aspect of the present invention includes: an information acquiring unit that acquires an information from a recording medium including plural sets of an information area storing the information and a recording information area corresponding to the information area, the recording information area storing a recording information associated with a recording position of the information in the information area; a recording-information acquiring unit that acquires the recording information from the recording medium; an information determining unit that determines whether the recording positions of the information are overlapped or not, according to the recording information of the respective recording information areas acquired by the recording-information acquiring unit; and an information selecting unit that operates, when the information determining unit determines that the recording positions of the information are overlapped, the information acquiring unit to acquire the information of the information area corresponding to the recording information area storing at least one of the recording information out of the recording information acquired before acquiring the recording information that is determined to be overlapped.

An information processing apparatus according to a third aspect of the present invention, for acquiring an information from a recording medium including plural sets of an information area storing the information and a recording information area corresponding to the information area, the recording information area storing a recording information associated with the information, the apparatus includes a recording-information acquiring unit that acquires the recording information from the recording medium; and a switch that switches between a multi-session acquisition mode that acquires the recording information respectively from the plurality of recording information areas by the recording-information acquiring unit, and a single-session acquisition mode that acquires the recording information from one of the plural recording information areas by the recording-information acquiring unit.

An information processing method according to a fourth aspect of the present invention for acquiring an information from a recording medium including a plural sets of an information area storing the information and a recording information area corresponding to the information area, the recording information area storing a recording information associated with the information, the method includes the steps of: acquiring the plurality of recording information respectively stored in the recording information areas; determining whether the acquired recording information is abnormal or not; and when it is determined that the recording information is determined as abnormal, acquiring the information of the information area corresponding to the recording information area storing at lease one of the recording information out of the recording information acquired before acquiring the recording information that is determined as abnormal.

An information processing method according to a fifth aspect of the present invention for acquiring an information from a recording medium including plural sets of an information area storing the information and a recording information area corresponding to the information area, the recording information area storing a recording information associated with a recording position of the information in the information area, the method includes the steps of: acquiring the plurality of recording information respectively stored in the recording information areas; determining whether the recording positions of the information are overlapped or not according to the plurality of acquired recording information; and when it is determined that the recording positions of the information are overlapped, acquiring the information of the information area corresponding to the recording information area storing the recording information acquired before acquiring the recording information that is determined to be overlapped.

An information processing method according to a sixth aspect of the present invention for acquiring an information from a recording medium including plural sets of an information area storing the information and a recording information area corresponding to the information area, the recording information area storing a recording information associated with the information, the method includes the steps of: acquiring an information associated with a switch request; and switching between a multi-session acquisition mode that acquires the recording information respectively from the plurality of recording information areas and a single-session acquisition mode that acquires the recording information from one of the plural recording information areas.

A player according to a seventh aspect of the present invention, includes: the information processing apparatus according to the first to third aspects of the present invention; an output unit; and a processing unit that processes the information acquired by the information processing apparatus so that the information can be output by the output unit.

A player according to an eighth aspect of the present invention, includes: the information processing apparatus according to the aforesaid aspect of the present invention; an output unit; a processing unit that processes the information acquired by the information processing apparatus so that the information can be output by the output unit; and an input unit that sets the switch request with an input operation, the switch request switching between the multi-session acquisition mode and the single-session acquisition mode by the switch of the information processing apparatus.

An information processing program according to a ninth aspect of the present invention executes the information processing method according to the fourth to sixth aspects of the present invention by a computer.

A recording medium according to a tenth aspect of the present invention stores the information processing program according to the ninth aspect of the present invention in a manner readable by a computer.
Fig. 1 is a schematic drawing that shows structure of a recording disk, the disk reproduced by a player according to an embodiment of the present invention;
Fig. 2 is a block diagram schematically showing structure of the player according to the embodiment;
Fig. 3 is an explanatory drawing that schematically shows the structure of the recording disk to explain a process of an information determining unit of the player according to the embodiment; and
Fig. 4 is a flowchart showing an operation for acquiring a recording information of the player according to the embodiment.

An embodiment according to an information processing apparatus of the present invention will be described below with reference to attached drawings. The embodiment explains a player that reproduces information stored in a recording disk of multi-session type as a recording medium. The recording disk may be a CD-ROM (Compact Disk-Read Only Memory), a DVD-ROM (Digital Versatile Disc-Read Only Memory), or the like. The intended recording medium is not limited to the above recording disk, but various recording medias are applicable.

### [Structure of Recoding Disk]

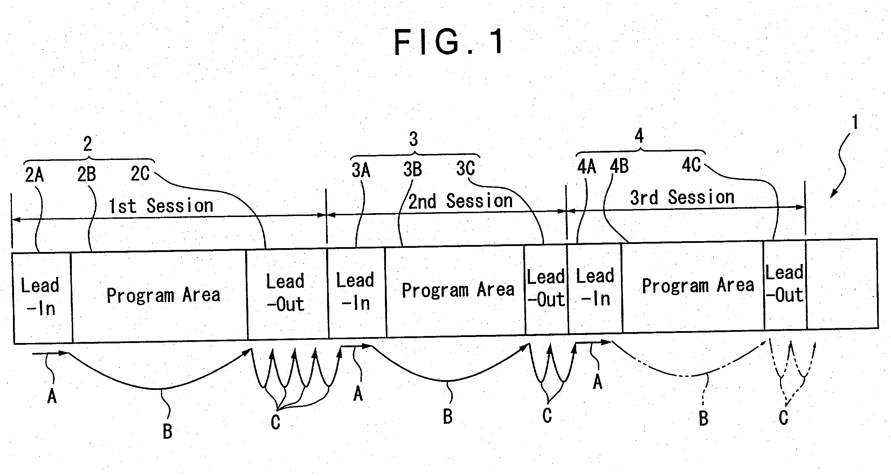

Structure of a recording disk is described below with reference to Fig. 1 as a recording medium reproduced by a player of the embodiment according to the present invention. Fig. 1 is a schematic drawing that shows structure of the recording disk as the recording medium.

The recording disk 1 is formed in a disk-shape and has a circular center hole (not shown) at the center, one surface of the disk 1 being an information recording surface. A lead-in area 2A is provided on the innermost circumferential side of the information recording surface, the lead-in area 2A having a recording information area storing a lead-in code to indicate a beginning edge. A program area 2B is provided on the information recording surface, being adjacent to the lead-in area 2A on its outer circumferential side, the program area 2B having an information area storing a program information including various information such as music data, image data and program data. A lead-out area 2C is provided on the information recording surface, being adjacent to the program area 2B on its outer circumferential side, the lead-out area 2B storing a lead-out code to indicate an end edge of the program area 2B. A set of the lead-in area 2A, the program area 2B and the lead-out area 2C constitutes a session 2.

The recording disk 1 of the multi-session type has a plurality of sessions 2, e.g. three sessions. Specifically, the recording disk 1 has a first session 2, a second session 3 and a third session 4 that are sequentially arranged from the innermost circumference of the disk 1 toward outside. The sessions 3 and 4 each has a set of a lead-in area 3A or 4A, a program area 3B or 48, and a lead-out area 3C or 4C as well as the session 2. Though this embodiment has the three sessions 2, 3 and 4, the number of sessions is not limited to three. In other words, a recording medium having a plurality of sessions, i.e. more than two sessions is classified as the multi-session type. On the other hand, a recording medium having only one session is classified as single-session type, e.g. a CD-DA (Compact Disk-Digital Audio).

The lead-in areas 2A, 3A and 4A each stores a recording information in addition to the lead-in cord. The recording information has: a type information associated with the type of the disk 1; an address information indicating the position of the program information stored in each of the program areas 2B, 3B and 4B; and the like, these information being included in a TOC information. The type information of the disk 1 is information for identifying the kind of the disk 1 such as a CD-DA, CD-ROM, DVD-ROM, DVD-R (Digital Versatile Disc-Recordable) or DVD-RW (Digital Versatile Disc-ReWritable), and the type of the disk 1 such as the single-session type or the multi-session type. The address information includes a start time for a track (Tr) and a frame number etc. of the program information stored in each of the program areas 2B, 3B and 4B corresponding to each of the lead-in areas 2A, 3A and 4A.

### [Structure of Player]

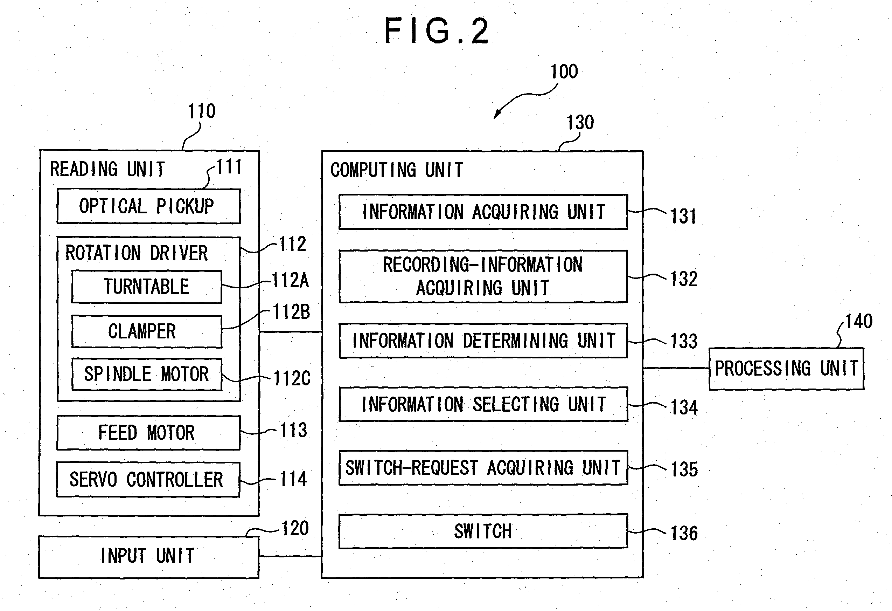

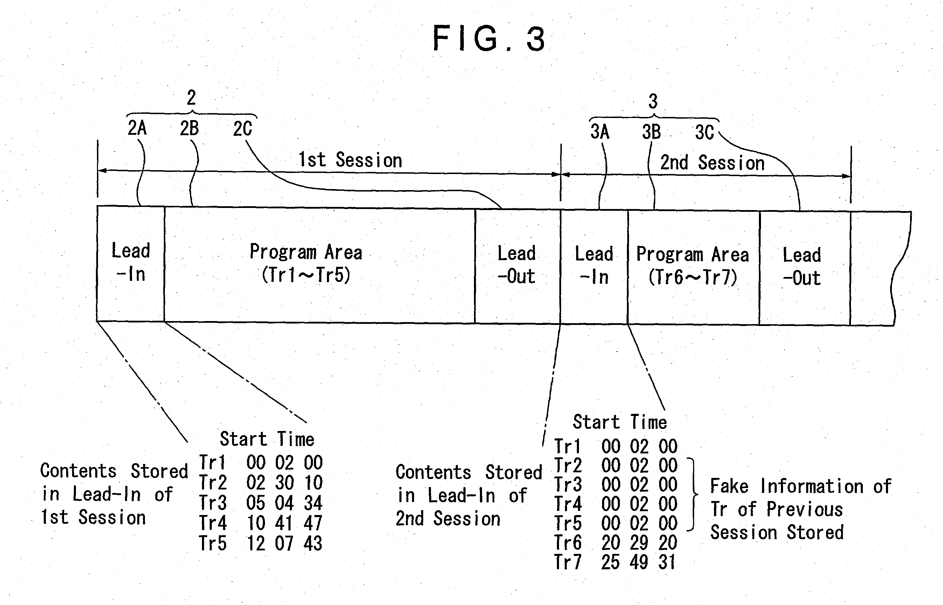

Structure of the player is described below with reference to attached drawings, the player reproducing the recording disk 1 of the multi-session type, the disk 1 having the above structure. Fig. 2 is a block diagram that schematically shows structure of the player. Fig. 3 is an explanatory drawing that schematically shows structure of the recording disk to explain a process of an information determining unit.

In Fig. 2, reference numeral 100 denotes the player. The player 100 controls an output unit (not shown) to output, i.e. to reproduce various information stored in the disk 1. The player 100 has a reading unit 110, an input unit 120, a computing unit 130 as the information processing apparatus, and a processing unit 140.

The reading unit 110 reads various information stored on the information recording surface of the disk 1 such as the recording information including the TOC (Table of Contents) information stored in the lead-in area, and the program information stored in the program area. The reading unit 110 has an optical pickup 111, a rotation driver 112, a feed motor 113 and a servo controller 114.

The optical pickup 111 receives a light being irradiated onto and reflected by the information recording surface of the disk 1, and acquires various information as electrical signals.

The rotation driver 112 rotates the disk 1 placed on a prescribed position of the player 100 at a constant linear or angular velocity. The rotation driver 112 has a turntable 112A, a clamper 112B and a spindle motor 112C. The turntable 112A engages with the center hole of the disk 1 so as to rotate the disk 1 while placing the disk 1 on the prescribed position of the player 100. The clamper 112B holds the disk 1 with the turntable 112A, the disk 1 being sandwiched therebetween. The spindle motor 112C rotates the turntable 112A to rotate the disk 1 at a constant linear or angular velocity.

The feed motor 113 moves the optical pickup 111 parallel to the information recording surface of the disk 1 and along with its radial direction.

The servo controller 114 controls the drive of the spindle motor 112C to rotate the disk 1 at a constant linear or angular velocity. The servo controller 114 also controls the drive of the feed motor 113 to move the optical pickup 111 parallel to the information recording surface of the disk 1 and along with its radial direction. The servo controller 114 further controls a focus actuator and a tracking actuator (both not shown) provided in the optical pickup 111 to adjust a focal length of the reflected light and its focal position on the information recording surface.

The input unit 120 employs a mode switch or the like. The input unit 120 sets a switch request to switch a method for acquiring various information stored in the disk 1 with an input operation by a user. As the method for acquiring various information, there are provided modes of: a single-session acquisition mode for acquiring the program information only from the program area 2B of the first session 2 by the computing unit 130 regarding the disk 1 as the single-session type; and a multi-session acquisition mode for acquiring the program information from each of the program areas 2B, 3B and 4B of the sessions 2, 3 and 4 by the computing unit 130 regarding the disk 1 as the multi-session type. The setting of the switch request sets a switch request information to switch to the single-session acquisition mode or the multi-session acquisition mode corresponding to a switch operation with the input operation. The set switch request information is output to the computing unit 130. Note that the input unit 120 may be a remote controller to output the switch request information to the player 100 over a radio medium.

The computing unit 130 operates the reading unit 110 to read a certain information from the disk 1, i.e. the computing unit 130 selects the information to be read by the reading unit 110. The computing unit 130 controls the entire operation of the reading unit 110. The computing unit 130 has an information acquiring unit 131, a recording-information acquiring unit 132, an information determining unit 133, an information selecting unit 134, a switch-request acquiring unit 135 and a switch 136.

The information acquiring unit 131 acquires the program information stored in the program areas 2B, 3B and 4B of the disk 1, out of various information read by the reading unit 110.

The recording-information acquiring unit 132 acquires the recording information stored in the lead-in areas 2A, 3A and 4A of the disk 1, out of information read by the reading unit 110.

The information determining unit 133 compares the respective type information of the recording information acquired by the recording-information acquiring unit 132 and determines whether the type information are identical or not. The information determining unit 133 also compares the address information of the recording information and determines whether the program information is overlapping. Namely, the information determining unit 133 determines whether the address information is abnormal or not. The abnormality means that the plurality of different program information represents an identical start time of the address information, or a program information overlaps with a different program information according to the start times for both program information and their length.

For instance, assume that a type information of a recording information acquired at the first session 2 represents the disk 1 as a CD-ROM, and a type information of a recording information acquired at the second session 3 represents the disk 1 as a CD-DA. In such case, the information determining unit 133 determines that the type information of the recording information is abnormal, since the both type information have different information.

For another instance as shown in Fig. 3, assume that an address information of a recording information acquired at the session 2 includes start times for a track (Tr) 1 as 2 sec 00, a Tr 2 as 2 min 30 sec 10, a Tr 3 as 5 min 4 sec 34, a Tr 4 as 10 min 41 sec 47 and a Tr 5 as 12 min 7 sec 43. Further, assume that an address information acquired at the session 3 includes start times for a Tr 6 as 20 min 29 sec 20 and a Tr 7 as 25 min 49 sec 31, with start times for the Trs 1 to 5 as 2 sec 00 as fake information for the purpose of copy protection and they are not actually stored in the program area 3B.

In such case, even though the program information of the Tr 1 is not stored in the program area 3B of the session 3, the address information is considered as normal since the start times of the address information of the Tr 1 stored in the session 2 and the one of the Tr 1 stored in the session 3 are identical. There is no problem in rewriting the address information in an embedded memory. The start times for the Trs 2 to 5 of the session 2, however, are different from the start times for the Trs 2 to 5 of the session 3. The above start times are considered as abnormal. Since the start times for the Trs 1 to 5 of the session 3 represent the same time, the program information of the Trs 1 to 5 are considered as being stored in an identical position, i.e. they are overlapped. If the program information is searched under the above condition, search error may occur. The information determining unit 133, therefore, determines the recording information of the session 2 as abnormal.

In the case that the information determining unit 133 compares the recording information and determines that the type information of the recording information are not identical or the address information is abnormal since the program information overlaps with the different program information, the information selecting unit 134 operates the information acquiring unit 131 to acquire, e.g. one program information corresponding to the lead-in area 2A storing the recording information of the session 2 acquired first; or a program information corresponding to any one of the lead-in area 2A, 3A or 4A storing normal recording information read before it is determined that the recording information is abnormal, based on the corresponding recording information.

The switch-request acquiring unit 135 acquires the switch request information output from the input unit 120 and recognizes whether the input operation is conducted or not to switch either the single-session acquisition mode or the multi-session acquisition mode. The single-session acquisition mode orders to acquire only the recording information of the lead-in area 2A of the session 2 as the recording information to be acquired by the recording-information acquiring unit 132 without recognizing of the determination made by the information determining unit 133 to acquire the program information only from the program area 2B of the session 2 based on the acquired recording information. The multi-session acquisition mode orders to sequentially acquire the recording information of the respective lead-in areas 2A, 3A and 4A of the sessions 2, 3 and 4 as the recording information to be acquired by the recording-information acquiring unit 132 to respectively acquire the program information from the program areas 2B, 3B and 4B of the sessions 2, 3 and 4 corresponding to the acquired recording information, based on the determination of the information determining unit 133.

The switch 136 sets the information acquiring unit 131 to acquire the program information through the control of the information selecting unit 134 based on the recognition of the setting of the switch-request acquiring unit 135 so to switch between the single-session acquisition mode and the multi-session acquisition mode. Namely, the acquiring mode of the information acquired by the information acquiring unit 131 though the control of the information selecting unit 134 is set to one of the single-session acquisition mode and the multi-session acquisition mode.

The processing unit 140 executes processing for reproducing the program information acquired by the information acquiring unit 131 of the computing unit 130. For instance, when the program information is music data, the processing unit 140 executes processing for reproducing the music data as music from an output unit such as a speaker, or when the program information is image data, the processing unit 140 executes processing for replaying the image data as screen display on an output unit such as a display. The processed information is output by the output unit (not shown) connected to the processing unit 140 and reproduced.

### [Operation for Acquiring Information by Computing unit of Player]

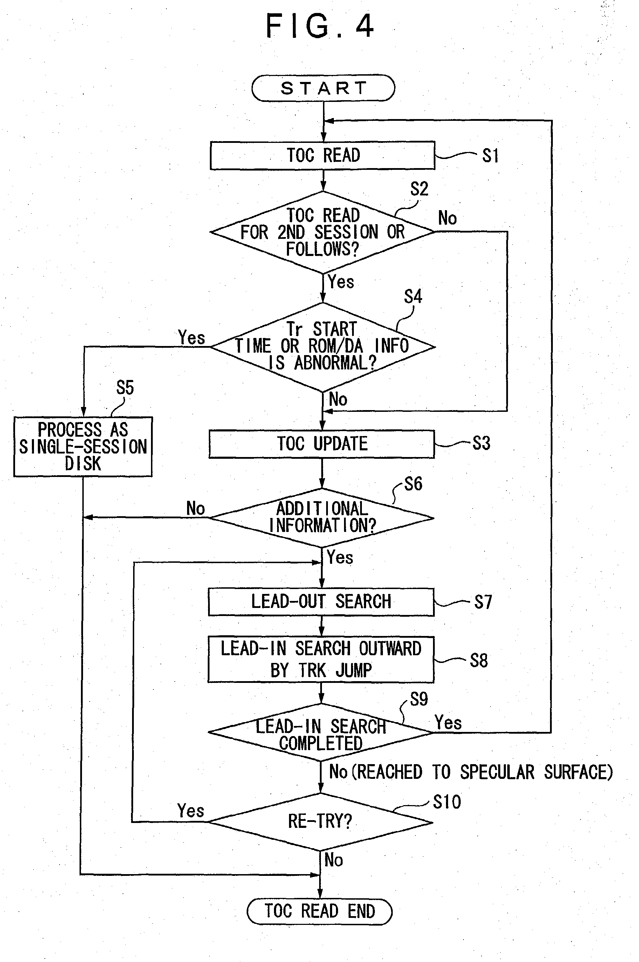

An operation of the above player for acquiring the information from the recording disk is described below with reference to attached drawings. Fig. 4 is a flowchart showing an operation for acquiring the recording information.

When the recording disk 1 is placed on the player 100, the computing unit 130 controls the servo controller 114, drives the feed motor 113, and positions a reading laser of the optical pickup 111 on the innermost circumference of the disk 1, the laser being as a light reflected at the disk 1. The spindle motor 112C is activated to rotate the disk 1 at a constant linear velocity.

The computing unit 130 controls the focus actuator and the tracking actuator (both not shown) of the optical pickup 111 to acquire the recording information such as the TOC information by the recording-information acquiring unit 132 from the lead-in area 2A of the first session 2 as indicated by an arrow A in Fig. 1 (step S1). The computing unit 130 determines the type of the disk 1 based on the type information included in the acquired recording information and determines the disk 1 as the single-session type or the multi-session type based on the type information and the setting by the switch 136 (step 52).

In the step S2, if the disk 1 is determined as the single-session type, or the disk 1 is set as the single-session acquisition mode by the switch 136, the recording information of the session 2 is stored in the embedded memory (not shown) of the computing unit 130, or the recording information stored in the embedded memory is updated (step S3). In the step S2, if the disk 1 is determined as the multi-session type, or the disk 1 is set as the multi-session acquisition mode by the switch 136, the information determining unit 133 determines whether the acquired recording information is abnormal or not (step S4).

In the step S4, since there is no recording information previously acquired at the acquisition of the recording information of the session 2, the information determining unit 133 determines that the recording information is normal. When the recording information of the second session 3 or later is acquired in the step S1, the recording information is already acquired. Therefore the information determining unit 133 compares the recording information previously acquired with the one newly acquired to determine whether the recording information newly acquired is abnormal or not. If it is determined that the recording information newly acquired is normal, the operation shifts to the step S3. The computing unit 130 operates the embedded memory to store the recording information newly acquired by the recording-information acquiring unit 132 corresponding to the sessions 3 and 4.

If the step S4 recognizes the abnormality, i.e., the compared recording information include abnormal information, specifically, the type information are not identical, or the above described address information as shown in Fig. 3 is abnormal, the disk 1 is treated as the single-session type, processed as the single-session acquisition mode (step S5), and the operation for acquiring the recording information is terminated. Specifically, the recording information of the session 2 previously acquired is stored in the embedded memory and the operation for acquiring the recording information is terminated even if there are other sessions 3 and 4.

After storing the recording information in the embedded memory in the step S3, it is determined whether there is other additional information as the recording information or not (step S6). For instance, it is determined whether, in the recording information stored in the embedded memory, there is the additional information indicating that further sessions are provided or an address information for the lead-out areas 2C, 3C and 4C. If there is no additional information, the computing unit 130 controls the servo controller 114 for searching the program information and acquires the program information by the information acquiring unit 131 based on the address information of the recording information stored in the embedded memory. In the case that the step S5 sets the disk 1 as the single-session acquisition mode, the operation shifts to the process to acquire the program information only from the program area of the session 2 based on the recording information stored in the embedded memory as well as the case of the multi-session acquisition mode.

In the step S6, if it is determined that there is an additional information, e.g., it is determined that further sessions are included, the recording information stored in the lead-in areas 3A and 4A of the session 3 or later is acquired.

Specifically, as indicated with an arrow B in Fig. 1, the computing unit 130 recognizes the position of the lead-out areas 2C, 3C and 4C of the sessions 2, 3 and 4 corresponding to the acquired recording information based on the additional information of the acquired recording information. The computing unit 130 controls the servo controller 114, drives the optical pickup 111 to the positions corresponding to the lead-out areas 2C, 3C and 4C, and searches the information of the lead-out areas 2C, 3C and 4C (step S7).

As indicated with an arrow C in Fig. 1, the computing unit 130 controls the servo controller 114 to move the optical pickup 111 and searches the lead-in area 3A of the session 3 and the lead-in area 4A of the session 4, both areas 3A and 4A respectively being adjacent to the lead-out areas 2C and 3C previously searched (step S8). According to the search of the lead-in areas 3A and 4A in the step S8, it is determined whether the lead-in areas 3A and 4A are detected or not (step S9).

If the lead-in areas 3A and 4A are detected in the step S9, the operation shifts to the step S1, and the recording information of the detected lead-in areas 3A and 4A are acquired. If the lead-in areas 3A and 4A cannot be detected in the step S9, the computing unit 130 determines whether the lead-in areas 3A and 4A are re-searched or not (step S10).

In the step S 10, if it is recognized, by comprising number of searches, that a prescribed number of searches are performed, or it is determined that there is no information stored but only specular surface when the reading laser reads the information, the re-search is not conducted. The acquisition of the recording information is terminated and the program information is searched based on the recording information stored in the embedded memory as described above to acquire the program information by the information acquiring unit 131. On the other hand, if it is determined that the prescribed number of searches are not performed, or there is information stored when the reading laser reads the information, the operation goes back to the step S7 to re-search.

According to the arrows B and C in Fig. 1, arrows of two-dot chain lines represent the process of the step S7 to search the lead-out area 4C when an additional information is included in the recording information of the lead-in area 4A of the session 4 to indicate that the session 4 is not the final session, or when there is no additional information to indicate that the session 4 is the final session.

The computing unit 130 outputs the program information acquired by the information acquiring unit 131 based on the recording information to the processing unit 140. The processing unit 140 acquired the output program information processes, e.g. decodes the program information and outputs it to the output unit (not shown). The processed program information is reproduced as music data or replayed as screen display with the output of the program information to the output unit.

According to the above embodiment, when the information determining unit 133 compares the recording information of the respective lead-in areas 2A, 3A and 4A of the disk 1 acquired by the recording-information acquiring unit 132, and determines that the type information of the recording information are abnormal since they are not identical, the proper program information is acquired by the information acquiring unit 131. The proper program information means the program information of the program areas 2B, 3B and 4B corresponding to the lead-in areas 2A, 3A and 4A storing at least one of the recording information acquired before acquiring the recording information that is determined as abnormal, e.g. the program information of only the program area 2B of the session 2 based on the recording information acquired first.

Even when the recording information includes a fake information as the type information for the purpose of copy protection, the program information can be searched since the abnormal recording information is rewritten with the proper one previously acquired. Based on the proper recording information previously acquired, at least the program information corresponding to the proper recording information can be reproduced, thereby preventing reproduction failure such that the program information cannot be reproduced at all.

When the information determining unit 133 determines the information as abnormal, the program information of only the program area 2B is acquired by the information acquiring unit 131, the program information corresponding to the lead-in area 2A storing the recording information of the session 2 acquired first. If the recoding information has a fake information for the purpose of copy protection, information is acquired as the single-session type such as an ordinal CD-DA, therefore, at least the information can be acquired from the disk 1 as the single-session type, thereby easily preventing reproduction failure in which the program information cannot be reproduced at all.

The recording-information acquiring unit 132 sequentially acquires the recording information, e.g. beginning with the session 2, and the information determining unit 133 sequentially compares the recording information in an order of acquisition to determine whether the recording information are abnormal or not. Accordingly, it can be recognized which one of sessions 2, 3 and 4 includes the abnormal recording information for the purpose of copy protection, therefore, the session available for the proper information can be easily selected so that the information can be easily acquired without reproduction failure.

The information determining unit 133 compares e.g. the address information of the recording information, and determines whether the position, where the program information is stored, overlaps with other position or not. If it is determined that the positions, where the program information are stored, are overlapped, the proper program information is acquired by the information acquiring unit 131. The proper program information means the program information of the program areas 2B, 3B and 4B corresponding to the lead-in areas 2A, 3A and 4A storing at least one of the recording information acquired before acquiring the recording information that is determined to be overlapped, e.g. the program information of only the program area 2B of the session 2 based on the recording information acquired first Even when the recording information includes a fake information as the address information for the purpose of copy protection, the program information can be searched since the abnormal recording information is rewritten with the proper one previously acquired. Based on the proper recording information previously acquired, at least the program information corresponding to the proper recording information can be reproduced, thereby preventing reproduction failure in which the program information cannot be reproduced at all.

The switch 136 can switch between the multi-session acquisition mode that operates the recording-information acquiring unit 132 to acquire the recording information from the respective lead-in areas 2A, 3A and 4A of the disk 1, and the single-session acquisition mode that operates the recording-information acquiring unit 132 to acquire the recording information from one of the lead-in areas 2A, 3A and 4A. The computing unit 130, therefore, is unnecessary to compute to determine the types of either the multi-session type or the single-session type, but the types can be switched with the manual operation, thereby reducing processing load, promptly acquiring the information, and shorten the time between information processing and reproduction by the output unit.

By acquiring only the recording information of the session 2 acquired first in the multi-session acquisition mode, as the single-session acquisition mode, the information can be easily acquired in a smooth and a prompt manner as the disk 1 of the single-session type such as an ordinal CD-DA.

With this structure, the switch request information to switch the modes by the switch 136 is generated by the setting with the input unit to set the acquisition mode in advance, thereby promoting prompt processing.

### [Modifications of Embodiments]

The present invention is not limited to the above specific embodiment, but includes modifications as long as the objects of the present invention can be attained.

Though the player 100 acquires the program information for reproducing in the above-described configuration, it is not limited. For instance, a driver can be used to read information stored in a recording medium to process the information by a computer.

Though it is described that the above configuration reads the information from the recording disk 1 of the multi-session type, it is not limited. The information can be read from a recording medium of the single-session type such as a CD-DA and any configuration is applicable since the configuration can acquire the information from a recording medium of the multi-session type including an information area and a recording information area.

Though it is described that the above configuration acquires the program information only from the first session 2 when the recording information is determined as abnormal, it is not limited. The program information can be acquired based on the recording information acquired before it is determined that the recording information is abnormal. For instance, when it is determined that the recording information acquired from the third session 4 is abnormal since it is different from the one acquired from the second session 3, the program information may be acquired from the respective program areas 2B and 3B based on the recording information of the sessions 2 and 3.

A method for comparing the information at the information determining unit 133 may be: determining whether the start times for the different Trs are same or not according to the acquired address information; determining whether the program information overlaps with the one of the different Tr or not; determining the acquired recording information as abnormal; and acquiring the program information based on the other proper recording information.

Though it is described that the above configuration sequentially compares the recording information in an order of acquisition, it is not limited. A plurality of recording information acquired in advance can be compared at a time to determine their abnormality, and then the program information can be acquired based on the identical recording information excluding abnormal different recording information, or the program information can be acquired based on the recording information whose address information is normal. It is not limited to the case that the recording information are sequentially acquired, but they may be acquired at a time.

The comparison may be either one for ID information of the recording information to determine whether they are identical or not, or one for the address information to determine whether the program information overlaps with other program information or not, i.e. the address information being abnormal or not.

Though the overlapping of the program information is determined according to the start times as the address information, it can be determined according to whether the program information overlaps with other one or not based on the start times and the lengths of the program information. Without limiting to the start time, any start position information is available, such as a frame number for identifying the position where the program information is stored.

Though it is described that the recording information is acquired according to the automatic setting as the single-session acquisition mode or the multi-session acquisition mode based on the ID information of the recording information, either the single-session type or the multi-session type, it is not limited. The modes can be forced to switch between the single-session acquisition mode and the multi-session acquisition mode simply by the switch operation with the input unit 120. Namely, when a user knows that the disk 1 is copy-protected while the disk 1 being the multi-session type, the acquisition mode can be forcedly set as the single-session acquisition mode without the computing unit 130 determining, thereby saving time for determination, promptly acquiring the program information, and promptly reproducing the program information in the case of the player 100.

Note that the configuration may not switch the modes since the input unit 120, the switch-request acquiring unit 135 and the switch 136 may not be provided. The input unit 120 may employ any configuration capable of setting the switch request information without limiting to the switch configuration described above.

The computing unit 130 as a computer may be a single personal computer, a combination of a plurality of computers that are connected over a network, an element such as a microcomputer, IC or CPU, or a circuit board on which a plurality of electronic parts are mounted. The configuration of the computing unit 130 may be a program stored in a recording medium or the one acquired over the network to configure the computing unit 130 by installing the program. Accordingly, the configuration can be widely used.

The arrangement and the operating procedures for implementing the above embodiment may be appropriately modified as long as the scope of the present invention can be attained.

### [Advantages of Embodiment]

As described above, this arrangement has: the information acquiring unit 131 that acquires the program information from the recording disk 1, the disk 1 including the program areas 2B, 3B, 48 storing the program information and the lead-in areas 2A, 3A, 4A storing the recording-information associated with the record of the program information corresponding to the respective program areas 2B, 3B, 4B; the recording information acquiring unit 132 that acquires the recording information from the disk 1; the information determining unit 133 that determines whether the recording-information of the respective lead-in areas 2A, 3A, 4A acquired by the recording-information acquiring unit 132 are abnormal or not; and the information selecting unit 134 that acquires, when the information determining unit 133 determines that the recording information is abnormal, the program information of the program areas 2B, 3B, 4B corresponding to the lead-in areas 2A, 3A, 4A storing at least one recording information out of the recording information acquired before acquiring the recording information that is determined as abnormal.

When the information determining unit 133 compares the recording information of the respective lead-in areas 2A, 3A, 4A of the disk 1 acquired by the recording-information acquiring unit 132, and determines that the recording information are abnormal since they are not identical, the proper program information is acquired by the information acquiring unit 131. The proper program information means the program information of the program areas 2B, 3B, 4B corresponding to the lead-in areas 2A, 3A, 4A storing at least one of the recording information acquired before acquiring the recording information that is determined as abnormal, e.g. the program information of only the program area 2B of the session 2 based on the recording information acquired first. Even when the recording information includes a fake information for the purpose of copy protection, the program information can be searched since the abnormal recording information is rewritten with the proper one previously acquired. Based on the proper recording information previously acquired, at least the program information corresponding to the proper recording information can be reproduced, thereby preventing reproduction failure such that the program information cannot be reproduced at all.

This arrangement has: the information acquiring unit 131 that acquires the program information from the recording disk 1, the disk 1 including the program areas 2B, 3B, 4B storing the program information and the lead-in areas 2A, 3A, 4A storing the recording information associated with the positions of the program information stored in the program areas 2B, 3B, 4B corresponding to the respective program areas 2B, 3B, 4B; the recording-information acquiring unit 132 that acquires the recording information from the disk 1; the information determining unit 133 that determines whether the recording positions of the program information are overlapped or not according to the recording information of the respective lead-in areas 2A, 3A, 4A acquired by the recording-information acquiring unit 132; and the information selecting unit 134 that acquires, when the information determining unit 133 determines that the recording positions of the program information are overlapped, the program information of the program areas 2B, 3B, 4B corresponding to the lead-in areas 2A, 3A, 4A storing at least one recording information out of the recording information acquired before acquiring the recording information that is determined to be overlapped.

The information determining unit 133 compares the recording information of the respective lead-in areas 2A, 3A, 4A of the disk 1 acquired by the recording-information acquiring unit 132, and determines whether the position, where the program information is stored, overlaps with other position or not. If it is determined that the positions, where the program information are stored, are overlapped, the proper program information is acquired by the information acquiring unit 131. The proper program information means the program information of the program areas 2B, 3B and 4B corresponding to the lead-in areas 2A, 3A and 4A storing at least one of the recording information acquired before acquiring the recording information that is determined to be overlapped, e.g. the program information of only the program area 2B of the session 2 based on the recording information acquired first. Even when the recording information includes a fake information for the purpose of copy protection, the program information can be searched since the abnormal recording information is rewritten with the proper one previously acquired. Based on the proper recording information previously acquired, at least the program information corresponding to the proper recording information can be reproduced, thereby preventing reproduction failure such that the program information cannot be reproduced at all.

The computing unit 130 acquires the program information from the disk 1, the disk 1 including the program areas 2B, 3B, 4B storing the program information and the lead-in areas 2A, 3A, 4A storing the recording information associated with the record of the program information corresponding to the respective program areas 2B, 3B, 4B, the computing unit 130 including: the recording-information acquiring unit 132 that acquires the recording information from the disk 1; and the switch 136 that switches between the multi-session acquisition mode in which the recording information is acquired from the respective lead-in areas 2A, 3A, 4A by the recording-information acquiring unit 132 and the single-session acquisition mode in which the recording information is acquired from one of the lead-in areas 2A, 3A, 4A by the recording-information acquiring unit 132.

The switch 136 switches between the multi-session acquisition mode that operates the recording-information acquiring unit 132 to acquire the recording information from the respective lead-in areas 2A, 3A, 4A of the disk 1 and the single-session acquisition mode that operates the recording-information acquiring unit 132 to acquire the recording information from one of the lead-in areas 2A, 3A, 4A. The computing unit 130, therefore, is unnecessary to compute to determine the types of either the multi-session type or the single-session type, but the types can be switched with the manual operation, thereby reducing processing load, promptly acquiring the information, and shorten the time between information processing and reproduction by the output unit.

## Claims

1. An information processing apparatus, comprising:
an information acquiring unit that acquires an information from a recording medium including plural sets of an information area storing the information and a recording information area corresponding to the information area, the recording information area storing a recording information associated with the information;
a recording-information acquiring unit that acquires the recording information from the recording medium;
an information determining unit that determines whether the recording information of the respective recording information areas acquired by the recording-information acquiring unit is abnormal or not; and
an information selecting unit that operates, when the information determining unit determines that the recording information is abnormal, the information acquiring unit to acquire the information of the information area corresponding to the recording information area storing at least one of the recording information out of the recording information acquired before acquiring the recording information that is determined as abnormal.

2. The information processing apparatus according to claim 1, wherein the information selecting unit operates, when the information determining unit determines the recording information as abnormal, the information acquiring unit to acquire the information of the information area corresponding to the recording information area storing the recording information acquired first.

3. The information processing apparatus according to claim 2,
wherein the recording-information acquiring unit sequentially acquires the recording information, and
wherein the information determining unit sequentially determines whether the recording information sequentially acquired by the recording-information acquiring unit is abnormal or not.

4. An information processing apparatus, comprising:
an information acquiring unit that acquires an information from a recording medium including plural sets of an information area storing the information and a recording information area corresponding to the information area, the recording information area storing a recording information associated with a recording position of the information in the information area;
a recording-information acquiring unit that acquires the recording information from the recording medium;
an information determining unit that determines whether the recording positions of the information are overlapped or not according to the recording information of the respective recording information areas acquired by the recording-information acquiring unit; and
an information selecting unit that operates, when the information determining unit determines that the recording positions of the information are overlapped, the information acquiring unit to acquire the information of the information area corresponding to the recording information area storing at least one of the recording information out of the recording information acquired before acquiring the recording information that is determined to be overlapped.

5. The information processing apparatus according to claim 4,
wherein the recording information has a start position information associated with a position for starting acquisition of the information, and
wherein the information determining unit determines that the recording positions of the information are overlapped when it is determined that the start position information is identical.

6. An information processing apparatus for acquiring an information from a recording medium including plural sets of an information area storing the information and a recording information area corresponding to the information area, the recording information area storing a recording information associated with the information, the apparatus comprising:
a recording-information acquiring unit that acquires the recording information from the recording medium; and
a switch that switches between a multi-session acquisition mode that acquires the recording information respectively from the plurality of recording information areas by the recording-information acquiring unit, and a single-session acquisition mode that acquires the recording information from one of the plural recording information areas by the recording-information acquiring unit.

7. The information processing apparatus according to claim 6, wherein, as the single-session acquisition mode, the switch acquires only the recording information acquired first in the multi-session acquisition mode.

8. The information processing apparatus according to claim 6 or 7, further comprising a switch-request acquiring unit that acquires a switch request between the multi-session acquisition mode and the single-session acquisition mode that are set with a manual operation,
wherein the switch switches between the multi-session acquisition mode and the single-session acquisition mode when the switch request is acquired by the switch-request acquiring unit.

9. The information processing apparatus according to any one of claims 1 to 3 and 6 to 8, wherein the recording information has a type information associated with the type of the recording medium.

10. The information processing apparatus according to any one of claims 1 to 3 and 6 to 8,
wherein the recording information is an address information associated with a recording position of the information in the information area, and
wherein the information determining unit determines that the recording information is abnormal when it is determined that an information is associated with plural different address information.

11. An information processing method for acquiring an information from a recording medium including plural sets of an information area storing the information and a recording information area corresponding to the information area, the recording information area storing a recording information associated with the information, the method comprising the steps of:
acquiring the plurality of recording information respectively stored in the recording information areas;
determining whether the acquired recording information is abnormal or not; and
when it is determined that the recording information is abnormal, acquiring the information of the information area corresponding to the recording information area storing at lease one of the recording information out of the recording information acquired before acquiring the recording information that is determined as abnormal.

12. An information processing method for acquiring an information from a recording medium including plural sets of an information area storing the information and a recording information area corresponding to the information area, the recording information area storing a recording information associated with a recording position of the information in the information area, the method comprising the steps of:
acquiring the plurality of recording information respectively stored in the recording information areas;
determining whether the recording positions of the information are overlapped or not according to the plurality of acquired recording information; and
when it is determined that the recording positions of the information are overlapped, acquiring the information of the information area corresponding to the recording information area storing the recording information acquired before acquiring the recording information that is determined to be overlapped.

13. An information processing method for acquiring an information from a recording medium including plural sets of an information area storing the information and a recording information area corresponding to the information area, the recording information area storing a recording information associated with the information, the method comprising the steps of:
acquiring an information associated with a switch request; and
switching between a multi-session acquisition mode that acquires the recording information respectively from the plurality of recording information areas and a single-session acquisition mode that acquires the recording information from one of the plural recording information areas.

14. A player, comprising:
the information processing apparatus according to any one of claims 1 to 10;
an output unit; and
a processing unit that processes the information acquired by the information processing apparatus so that the information can be output by the output unit.

15. A player, comprising:
the information processing apparatus according to any one of claims 8 to 10;
an output unit;
a processing unit that processes the information acquired by the information processing apparatus so that the information can be output by the output unit; and
an input unit that sets the switch request with an input operation, the switch request switching between the multi-session acquisition mode and the single-session acquisition mode by the switch of the information processing apparatus.

16. An information processing program executing the information processing method according to any one of claims 11 to 13 by a computer.

17. A recording medium storing the information processing program according to claim 16 in a manner readable by a computer.
